# EUROPEAN PATENT SPECIFICATION

(11) **EP 1 860 016 B1**
(45) Date of publication and mention of the grant of the patent: **17.02.2010**
(21) Application number: 07108734.0
(22) Date of filing: 23.05.2007
(51) Int. Cl.: B62D 1/02

(54) **Mechanical steering device of working vehicle**
Mechanische Lenkvorrichtung eines Arbeitsfahrzeugs
Dispositif de direction mécanique de véhicule de travail

(30) Priority: 26.05.2006 JP 2006147444
(43) Date of publication of application: 28.11.2007
(73) Proprietor: Kobelco Cranes Co., Ltd., Tokyo (JP)
(72) Inventor: Maruyama, Katsuya, Akashi-shi Hyogo 674-0063 (JP); Sato, Hirohito, Akashi-shi Hyogo 674-0063 (JP)
(74) Representative: TBK-Patent

(56) References cited:
- EP-A- 1 010 663
- WO-A-97/46438
- GB-A- 1 206 030

## Description

### BACKGROUND OF THE INVENTION

### 1. Field of the Invention

The present invention relates to mechanical steering devices of working vehicles, such as crane vehicles.

### 2. Description of the Related Art

In general, working vehicles, such as crane vehicles, include a lower traveling body having a plurality of wheels and an upper rotating body mounted on the lower traveling body. The upper rotating body has a working attachment, a cab that functions as an operator's cabin while the vehicle is in operation and as a driver's cabin while the vehicle is driving, etc.

For example, International Publication No. 97/46438 Pamphlet discloses a mechanical steering device that transmits a steering force from a steering wheel to wheels, in particular, front wheels, through shafts, gears, etc. In this device, when the steering force from the steering wheel is transmitted to the wheels, steering of the wheels is assisted by a steering cylinder. In order to transmit the steering force, which is a rotational force, from a transmission shaft disposed in the upper rotating body to a transmission shaft disposed in the lower traveling body, the following structure is generally provided. That is, as described in the above-mentioned pamphlet, an intermediate shaft is inserted through a through hole formed in a swivel joint that is positioned at the rotational center of the upper rotating body. A first bevel gear unit is attached to the top surface of the swivel joint so as to transmit the steering force between the intermediate shaft and the transmission shaft in the upper rotating body while converting the direction of the steering force by 90°. In addition, a second bevel gear unit is attached to the bottom surface of the swivel joint so as to transmit the steering force between the intermediate shaft and the transmission shaft in the lower traveling body while converting the direction of the steering force by 90° .

However, in this device, the first and second bevel gear units are directly attached to the top and bottom surfaces, respectively, of the swivel joint and the intermediate shaft is connected to shafts of bevel gears included in the bevel gear units with sleeves. Therefore, it is necessary to increase the straightness of the swivel joint, the product precision, and the assembly precision. If the straightness is not sufficient, abnormal load will be applied to bevel gear pairs and the like in the bevel gear units at the top and bottom ends of the swivel joint. As a result, the life of the swivel joint is reduced. In order to increase the straightness, not only the product precision of the swivel joint but also the product precision of the bevel gear units and the assembly precision of the swivel joint and the bevel gear units must be increased. Therefore, high manufacturing costs are incurred.

### SUMMARY OF THE INVENTION

An object of the present invention is to provide a mechanical steering device of a working vehicle that has a structure in which bevel gear units are prevented from receiving abnormal load even when the straightness of a swivel joint is not sufficient, thereby increasing the product life and eliminating the necessity of increasing the product precision and assembly precision, so that manufacturing costs can be reduced and the assembly can be facilitated.

The present invention is applied to a mechanical steering device of a working vehicle including a lower traveling body having wheels, an upper rotating body that is rotatably mounted on the lower traveling body, and a cab provided on the upper rotating body and functioning as an operator's cabin while the working vehicle is in operation and as a driver's cabin while the working vehicle is driving. According to the present invention, the mechanical steering device of the working vehicle also includes an intermediate shaft that extends through a through hole formed in a swivel joint disposed at a rotational center of the upper rotating body; a first bevel gear unit attached to a top surface of the swivel joint and configured to transmit a steering force of a steering wheel disposed in the cab from a transmission shaft disposed in the upper rotating body to the intermediate shaft; and a second bevel gear unit attached to a bottom surface of the swivel joint and configured to transmit the steering force transmitted to the intermediate shaft to wheels through a transmission shaft disposed in the lower traveling body. The first and second bevel gear units are respectively attached to the top and bottom surfaces of the swivel joint with brackets interposed between the swivel joint and the first and second bevel gear units, and a universal joint is disposed between the intermediate shaft and a shaft of a bevel gear included in at least one of the first and second bevel gear units.

In this structure, the universal joint is disposed between the intermediate shaft and a shaft of a bevel gear included in at least one of the first bevel gear unit attached to the top surface of the swivel joint and the second bevel gear unit attached to the bottom surface of the swivel joint. Therefore, even when the straightness of the swivel joint is not sufficient, the universal joint can compensate for the lack of straightness and adjust the engagement between the bevel gears in each bevel gear unit. Therefore, the bevel gears are prevented from receiving abnormal load. In addition, since the bevel gear units are attached to the swivel joint with the brackets interposed between the swivel joint and the bevel gear units, fine adjustment can be readily performed by adequately changing the shapes of the brackets or using shims.

As a result, the bevel gears are prevented from receiving abnormal load, and the product life can be increased. In addition, it is not necessary to increase the product precision and assembly precision, so that the manufacturing costs can be reduced and the assembly can be facilitated.

According to the present invention, in the above-described mechanical steering device, preferably, a bearing for rotatably supporting the intermediate shaft is disposed in the through hole in the swivel joint. In this structure, the intermediate shaft is rotatably supported by the bearing in the through hole formed in the swivel joint. Therefore, the intermediate shaft is reliably positioned and the straightness thereof is improved. As a result, the bevel gears are reliably prevented from receiving abnormal load.

According to the present invention, in the above-described mechanical steering device, preferably, the bottom end of the intermediate shaft projects downward beyond the bottom surface of the swivel joint and the universal joint is exposed between the bottom end of the intermediate shaft and a shaft of a bevel gear included in the second bevel gear unit. In this structure, since the universal joint provided between the bottom end of the intermediate shaft and the shaft of the bevel gear included in the second bevel gear unit is exposed, abnormality of the universal joint can be visually checked and the assembly can be further facilitated.

According to the present invention, in the above-described mechanical steering device, preferably, the bracket interposed between the second bevel gear unit and the bottom surface of the swivel joint provides a function of connecting the swivel joint to the lower traveling body. In this structure, a single bracket provides both the function of attaching the second bevel gear unit to the swivel joint and the function of connecting the swivel joint to the lower traveling body. Therefore, the number of components can be reduced. As a result, the manufacturing costs can be further reduced and the assembly can be further facilitated.

According to the present invention, in the above-described mechanical steering device, preferably, the intermediate shaft is divided into two segments at an intermediate position thereof and is capable of transmitting a rotational force through an Oldham coupling disposed at the position where the intermediate shaft is divided. In this case, even when the intermediate shaft expands or contracts due to temperature variation or the like, or even when the intermediate shaft has manufacturing errors, the expansion/contraction and the manufacturing errors can be absorbed by the Oldham coupling provided at the position where the intermediate shaft is divided. Therefore, application of abnormal load can be more effectively prevented.

According to the preset invention, in the case in which the cab is provided on the upper rotating body with mounting rubbers interposed therebetween to improve the comfort of the cab in the above-described mechanical steering device, the following structures may be provided. More specifically, preferably, the transmission shaft that extends across the cab and the upper rotating body, is extendable and retractable, and is supported by a bearing. In such a case, even when the cab and the upper rotating body vibrate individually due to the mounting rubbers interposed therebetween, the transmission shaft in the upper rotating body can extend and retract while being supported by the bearing. Therefore, the transmission shaft in the upper rotating body can be prevented from being adversely influenced. For example, the transmission shaft in the upper rotating body can be prevented from receiving abnormal load.

### BRIEF DESCRIPTION OF THE DRAWINGS

Fig. 1 is a plan view illustrating the overall structure of a mechanical steering device of a working vehicle according to a first embodiment of the present invention;
Fig. 2 is a side view of Fig. 1;
Fig. 3 is a partially broken side view of a transmission shaft of an upper-rotating-body transmission mechanism included in the mechanical steering device;
Fig. 4 is an enlarged sectional view of Fig. 3 taken along line IV-IV;
Fig. 5 is a diagram illustrating a ball bearing viewed in a direction shown by line V-V in Fig. 3;
Fig. 6 is a vertical sectional side view of the structure around a swivel joint included in the mechanical steering device;
Fig. 7 is an enlarged view of the structure around the top end of the swivel joint shown in Fig. 6;
Fig. 8 is a diagram illustrating the structure of Fig. 7 viewed in a direction shown by the arrow VIII;
Fig. 9 is an enlarged view of the structure around the bottom end of the swivel joint shown in Fig. 6;
Fig. 10 is a diagram illustrating the structure of Fig. 9 viewed in a direction shown by the arrow X;
Fig. 11 is a diagram corresponding to Fig. 6 according to a second embodiment;
Fig. 12 is a diagram corresponding to Fig. 6 according to a third embodiment;
Fig. 13 is a diagram corresponding to Fig. 6 according to a fourth embodiment; and
Fig. 14 is an exploded perspective view of an Oldham coupling.

### DETAILED DESCRIPTION OF THE PREFERRED EMBODIMENTS

As best modes for carrying out the present invention, embodiments of the present invention will be described below with reference to the accompanying drawings.

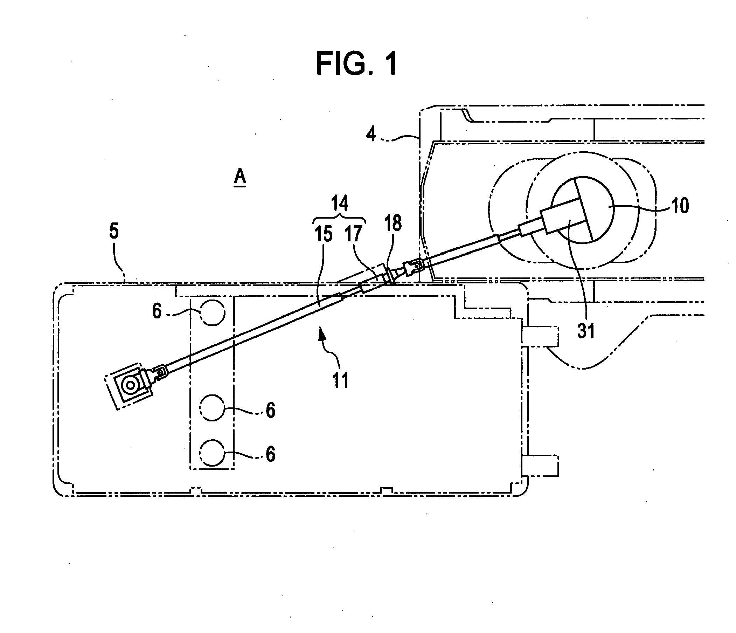

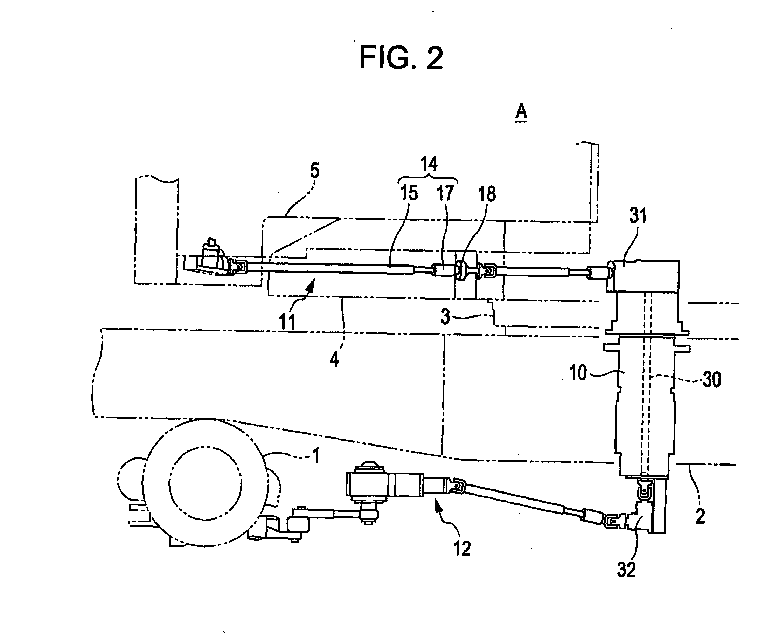

Figs. 1 and 2 illustrate the overall structure of a mechanical steering device A of a working vehicle according to a first embodiment of the present invention. The working vehicle includes a lower traveling body 2 having wheels (front axle in Fig. 2) 1 and an upper rotating body 4 that is rotatably mounted on the lower traveling body 2 with a swing bearing 3 interposed therebetween. A cab 5 that functions as an operator's cabin while the vehicle is in operation and as a driver's cabin while the vehicle is driving is provided at a front left section of the upper rotating body 4 with a plurality of mounting rubbers 6, 6, ..., interposed between the cab 5 and the upper rotating body 4.

The mechanical steering device A includes a steering wheel (not shown) disposed in the cab 5, an upper-rotating-body transmission mechanism 11 that transmits a steering force of the steering wheel to an upper portion of a swivel joint 10 disposed on the central axis of the swing bearing 3, and a lower-traveling-body transmission mechanism 12 that transmits the steering force from a lower portion of the swivel joint 10 to the wheels 1. Accordingly, the mechanical steering device A is capable of transmitting the steering force of the steering wheel to the wheels 1 so as to steer the wheels 1. When the mechanical steering device A steers the wheels 1, steering of each wheel 1 is assisted by a steering cylinder (not shown) provided on the wheel 1.

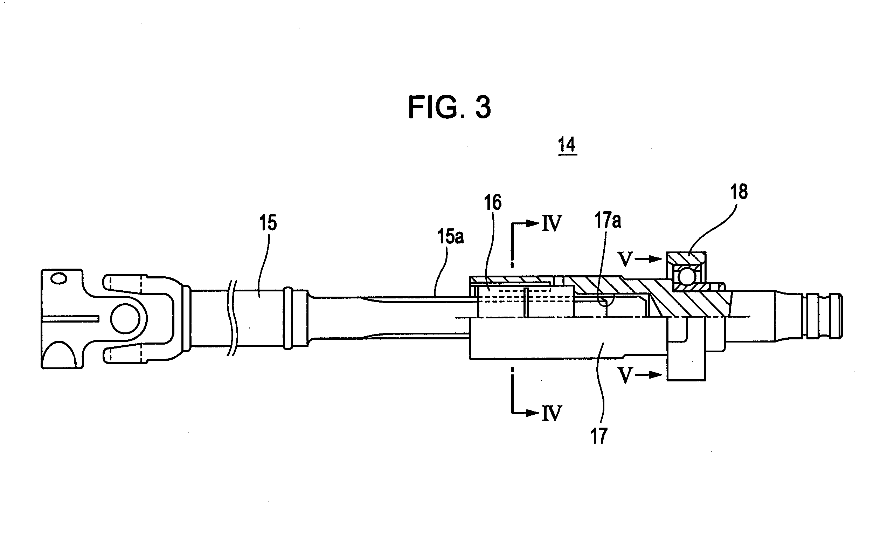

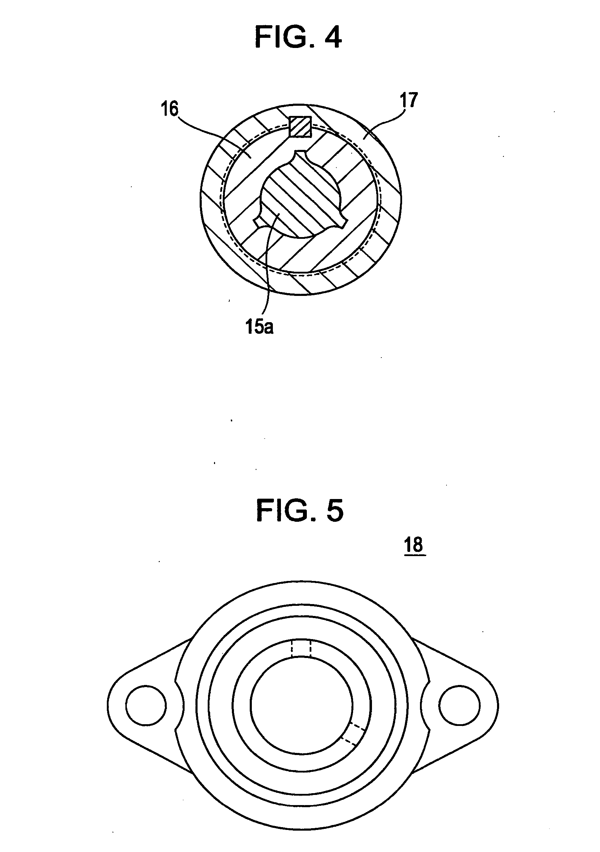

The upper-rotating-body transmission mechanism 11 includes a transmission shaft 14 that extends across the cab 5 and the upper rotating body 4 along the bottom surface of the cab 5. As shown in detail in Figs. 3 and 4, the transmission shaft 14 includes a first shaft 15 having a spline shaft portion 15a at a rear end thereof and a second shaft 17 having a fitting hole 17a to which the spline shaft portion 15a of the first shaft 15 is axially slidably fitted with a spline tube 16 interposed between the spline shaft portion 15a and the fitting hole 17a. Thus, the transmission shaft 14 is extendable and retractable. The second shaft 17 of the transmission shaft 14 is supported on the upper rotating body 4 by a ball bearing 18 shown in Fig. 5.

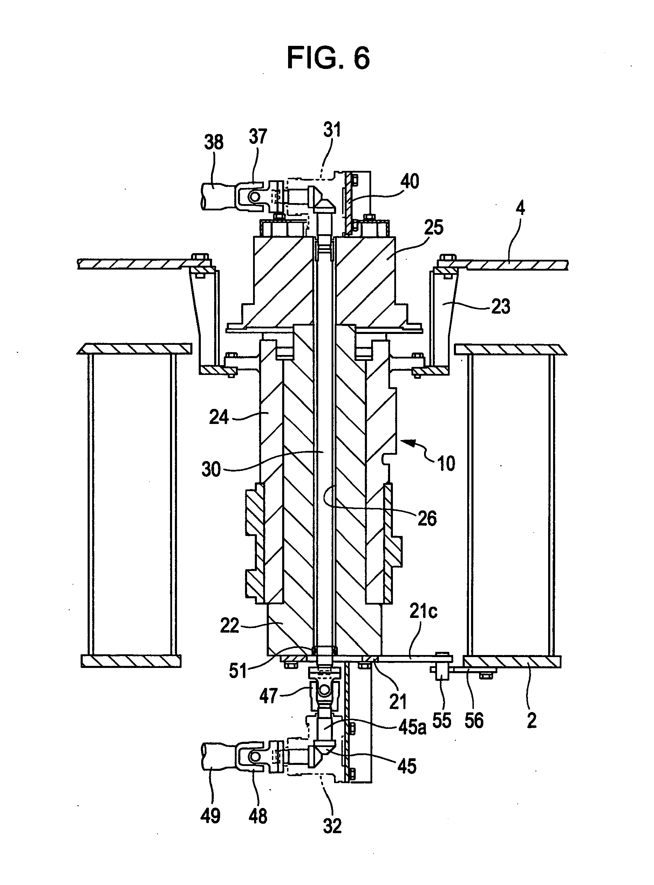

The swivel joint 10 is provided to connect hydraulic oil pipes and electrical wires between the lower traveling body 2 and the upper rotating body 4. As shown in detail in Fig. 6, the swivel joint 10 includes a stator 22 connected to the lower traveling body 2 with an attachment bracket 21 or the like, a rotor 24 that is rotatably attached to the outer periphery of the stator 22 and connected to the upper rotating body 4 with an attachment bracket 23 or the like, and a slip ring 25 that is fixed to the top surface of the rotor 24 and that is in contact with the top surface of the stator 22 such that the slip ring 25 can rotate relative thereto. The swivel joint 10 has a through hole 26 that extends through the stator 22 and the slip ring 25 along the centerline of the swivel joint 10.

The mechanical steering device A further includes an intermediate shaft 30 disposed so as to extend through the through hole 26 in the swivel joint 10, a first bevel gear unit 31 attached to the top surface of the slip ring 25 of the swivel joint 10, and a second bevel gear unit 32 attached to the bottom surface of the stator 22 of the swivel joint 10.

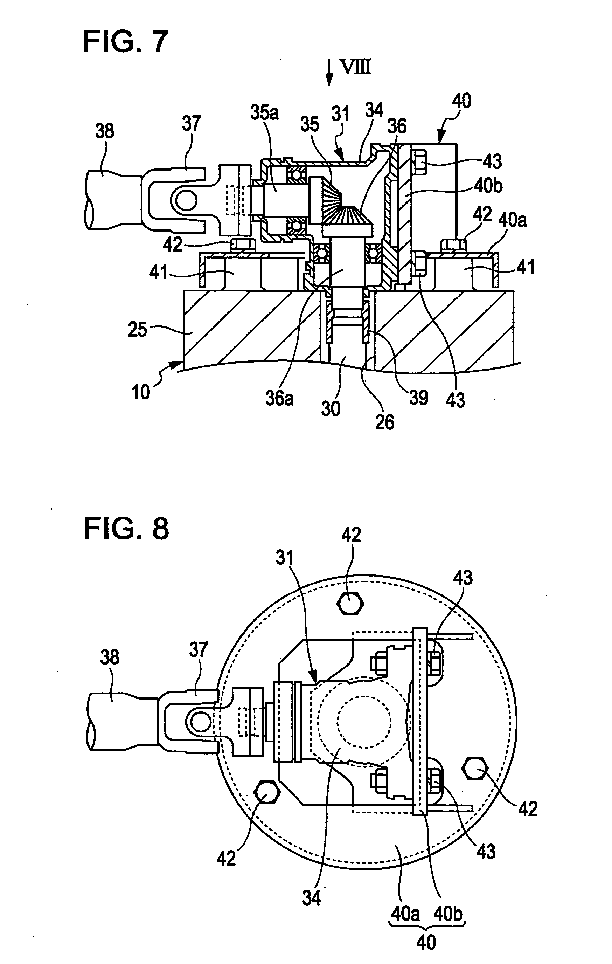

As shown in enlarged views of Figs. 7 and 8, the first bevel gear unit 31 includes a bevel gear pair, that is, two rotatable bevel gears 35 and 36 meshing with each other in a case 34. A shaft 35a of the bevel gear 35, which is one of the bevel gear pair, projects horizontally from the front of the case 34 and is connected to the last transmission shaft 38 in the upper-rotating-body transmission mechanism 11 with a Cardan joint 37 provided therebetween. A shaft 36a of the other bevel gear 36 projects vertically downward from the case 34 and is connected to the intermediate shaft 30 in the through hole 26 of the swivel joint 10 with a sleeve 39. Accordingly, the steering force is transmitted from the transmission shaft 38 in the upper-rotating-body transmission mechanism 11 to the intermediate shaft 30 by the first bevel gear unit 31.

The first bevel gear unit 31 is attached to the top surface of the slip ring 25 of the swivel joint 10 with a bracket 40 interposed therebetween. The bracket 40 includes a flanged, circular, horizontal plate 40a and a vertical plate 40b. The horizontal plate 40a is fixed by fitting a plurality of (three in the figures) bolts 42 to respective bolt-receiving portions 41 that project from the top surface of the slip ring 25. The vertical plate 40b is welded to the horizontal plate 40a so as to extend perpendicularly thereto. The case 34 of the first bevel gear unit 31 is fixed to the vertical plate 40b with bolts 43.

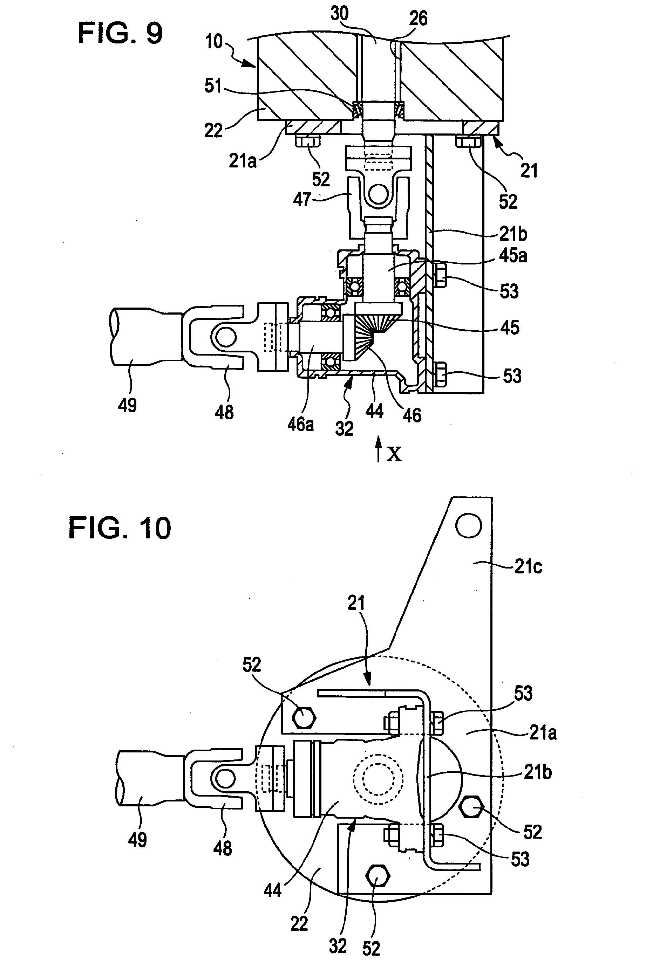

As shown in enlarged views of Figs. 9 and 10, the second bevel gear unit 32 includes a bevel gear pair, that is, two rotatable bevel gears 45 and 46 meshing with each other in a case 44. In the bevel gear pair, a shaft 45a of the bevel gear 45 projects vertically upward from the case 44 and is connected to the bottom end of the intermediate shaft 30 with a Cardan joint 47, which functions as a universal joint, provided therebetween. A shaft 46a of the other bevel gear 46 projects horizontally from the front of the case 44 and is connected to the last transmission shaft 49 in the lower-traveling-body transmission mechanism 12 with a Cardan joint 48 provided therebetween. Accordingly, the steering force transmitted to the intermediate shaft 30 is transmitted to the lower-traveling-body transmission mechanism 12 by the second bevel gear unit 32, and then to the wheels 1.

The bottom end of the intermediate shaft 30 projects downward beyond the bottom surface of the stator 22 of the swivel joint 10, and the above-described Cardan joint 47 is exposed between the bottom end of the intermediate shaft 30 and the shaft 45a of the bevel gear 45 in the second bevel gear unit 32. A bearing 51 for rotatably supporting the intermediate shaft 30 at a position near the bottom end of the through hole 26 in the swivel joint 10 is fitted to the through hole 26.

The second bevel gear unit 32 is attached to the bottom surface of the stator 22 of the swivel joint 10 with the attachment bracket 21 interposed therebetween. The attachment bracket 21 includes a horizontal plate 21a fixed to the bottom surface of the stator 22 with bolts 52 and a vertical plate 21b that is welded to the flat plate 21a so as to extend downward therefrom. The case 44 of the second bevel gear unit 32 is fixed to the vertical plate 21b with bolts 53. The flat plate 21a of the attachment bracket 21 has a projecting portion 21c that projects horizontally from the bottom surface of the stator 22. The projecting portion 21c is connected to the lower traveling body 2 at an end thereof by a connection pin 55 and a connection plate 56, as shown in Fig. 6. Accordingly, the stator 22 of the swivel joint 10 is non-rotatably connected to the lower traveling body 2.

As described above, in the mechanical steering device A, the first bevel gear unit 31 and the second bevel gear unit 32 are attached to the top surface and the bottom surface, respectively, of the swivel joint 10 using the brackets 40 and 21, respectively. In addition, the Cardan joint 47 is provided between the bottom end of the intermediate shaft 30 that extends through the through hole 26 in the swivel joint 10 and the shaft 45a of the bevel gear 45 in the second bevel gear unit 32. Therefore, even when the straightness of the swivel joint 10 is not sufficient, the Cardan joint 47 can compensate for the lack of straightness and adjust the engagement between the bevel gears 35 and 36 in the bevel gear unit 31 and between the bevel gears 45 and 46 in the bevel gear unit 32. In addition, fine adjustment can also be readily performed by adequately changing the shapes of the brackets 40 and 21 or using shims. As a result, the bevel gear pairs in the bevel gear units 31 and 32 are prevented from receiving abnormal load and the product life can be increased. In addition, it is not necessary to increase the product precision and assembly precision, so that the manufacturing costs can be reduced and the assembly can be facilitated.

The intermediate shaft 30 is rotatably supported by the bearing 51 at a position near the bottom end of the through hole 26 in the swivel joint 10. Therefore, the straightness can be increased by reliably positioning the intermediate shaft 30, and the bevel gear pairs in the bevel gear units 31 and 32 can be reliably prevented from receiving abnormal load.

The bottom end of the intermediate shaft 30 projects downward beyond the bottom surface of the swivel joint 10, and the Cardan joint 47 is exposed between the bottom end of the intermediate shaft 30 and the shaft 45a of the bevel gear 45 in the second bevel gear unit 32. Therefore, abnormality of the structure around the joint 47 can be visually checked and the assembly can be further facilitated.

In addition, the bracket 21 interposed between the bottom surface of the swivel joint 10 and the second bevel gear unit 32 also provides a function of connecting the stator 22 of the swivel joint 10 to the lower traveling body 2. Therefore, the number of components can be reduced. As a result, the manufacturing costs can be further reduced and the assembly can be further facilitated.

In the upper-rotating-body transmission mechanism 11, the transmission shaft 14 that extends across the cab 5 and the upper rotating body 4 is extendable and retractable, and is supported by the ball bearing 18. Therefore, even if the cab 5 and the upper rotating body 4 vibrate individually due to the mounting rubbers 6 interposed therebetween, the transmission shaft 14 can be prevented from receiving abnormal load and transmission of the steering force can be prevented from being influenced by the vibration.

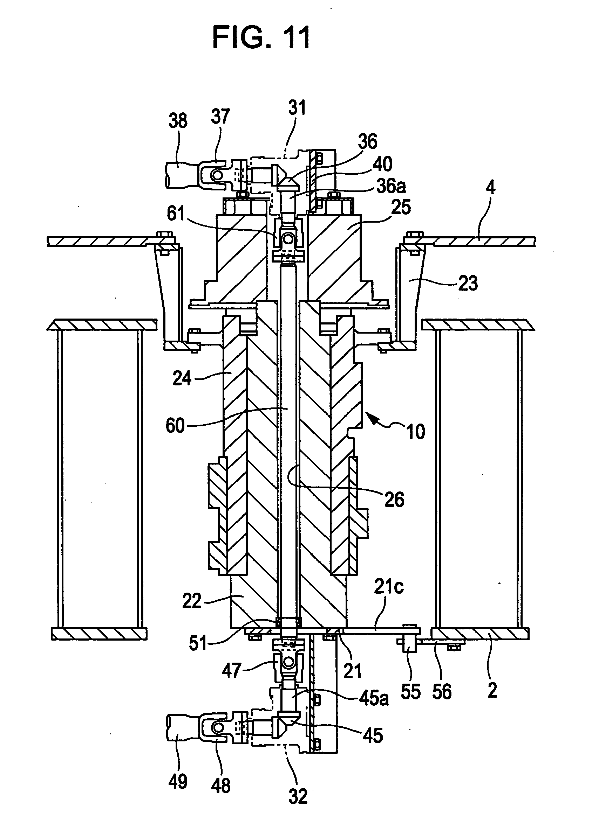

Fig. 11 shows the structure around a swivel joint included in a mechanical steering device of a working vehicle according to a second embodiment of the present invention.

Also in the second embodiment, a Cardan joint 47, which functions as a universal joint, is provided between the bottom end of an intermediate shaft 60 that extends through a through hole 26 in a swivel joint 10 and a shaft 45a of a bevel gear 45 included in a second bevel gear unit 32 that is attached to the bottom surface of the swivel joint 10. In addition, in the second embodiment, a Cardan joint 61, which also functions as a universal joint, is provided between the top end of the intermediate shaft 60 and a shaft 36a of a bevel gear 36 included in a first bevel gear unit 31 that is attached to the top surface of the swivel joint 10. The inner diameter of the through hole 26 in the slip ring 25 of the swivel joint 10 is set to be about twice as large as that of the through hole 26 in the stator 22 of the swivel joint 10, so that the Cardan joint 61 can be accommodated therein. The other structures of the second embodiment are similar to those of the first embodiment. Therefore, components similar to those of the first embodiment are denoted by the same reference numerals, and explanations thereof are thus omitted.

According to the second embodiment, even when the straightness of the swivel joint 10 is not sufficient, the two Cardan joints 47 and 61 interposed between the intermediate shaft 60 and the first and second bevel gear units 31 and 32, respectively, can reliably adjust the engagement between the bevel gears 35 and 36 in the bevel gear unit 31 and between the bevel gears 45 and 46 in the bevel gear unit 32 (see Figs. 7 and 9). In addition, a specific effect that the steering force can be uniformly transmitted irrespective of the rotational phase can be obtained. Additionally, the second embodiment, of course, also provides effects similar to those obtained by the first embodiment.

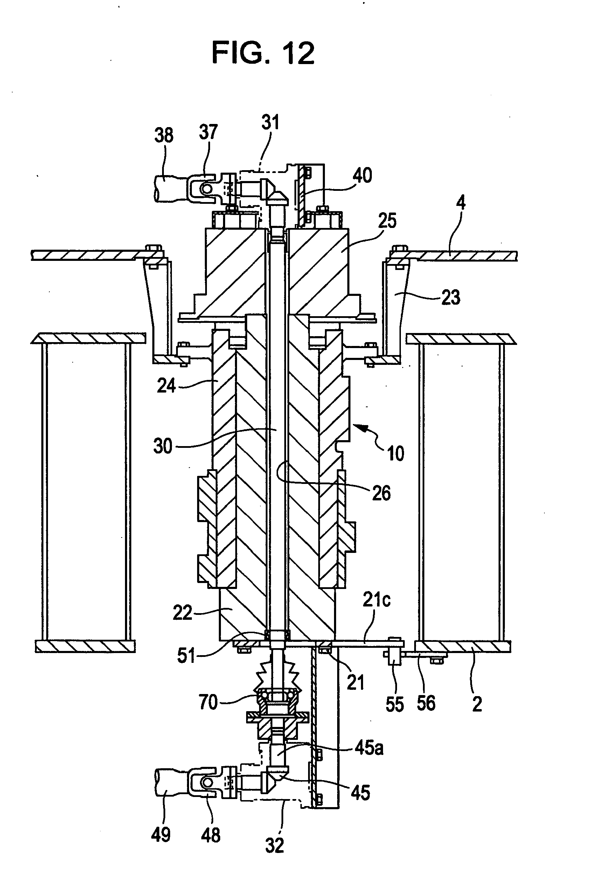

Fig. 12 shows the structure around a swivel joint included in a mechanical steering device of a working vehicle according to a third embodiment of the present invention.

In the third embodiment, instead of the Cardan joint 47 according to the first embodiment, a constant speed universal joint 70, which functions as a universal joint, is provided between the bottom end of an intermediate shaft 30 that extends through a through hole 26 formed in a swivel joint 10 and a shaft 45a of a bevel gear 45 included in a second bevel gear unit 32 that is attached to the bottom surface of the swivel joint 10. The other structures of the third embodiment are similar to those of the first embodiment. Therefore, components similar to those of the first embodiment are denoted by the same reference numerals, and explanations thereof are thus omitted.

Also in the third embodiment, a first bevel gear unit 31 and the second bevel gear unit 32 are attached to the top surface and the bottom surface, respectively, of the swivel joint 10 using brackets 40 and 21, respectively. In addition, the constant speed universal joint 70 is provided between the bottom end of the intermediate shaft 30 and the shaft 45a of the bevel gear 45 included in the second bevel gear unit 32. Therefore, even when the straightness of the swivel joint 10 is not sufficient, the engagement between the bevel gears 35 and 36 in the bevel gear unit 31 and between the bevel gears 45 and 46 in the bevel gear unit 32 (see Figs. 7 and 9) can be adjusted. In addition, similar to the second embodiment, the steering force can be uniformly transmitted irrespective of the rotational phase. Thus, the third embodiment is more advantageous than the first embodiment.

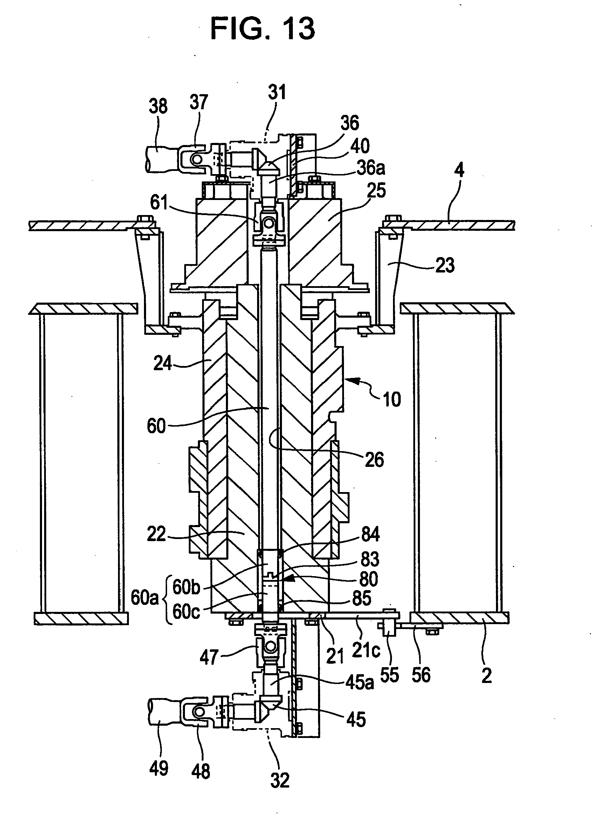

Fig. 13 shows the structure around a swivel joint included in a mechanical steering device of a working vehicle according to a fourth embodiment of the present invention.

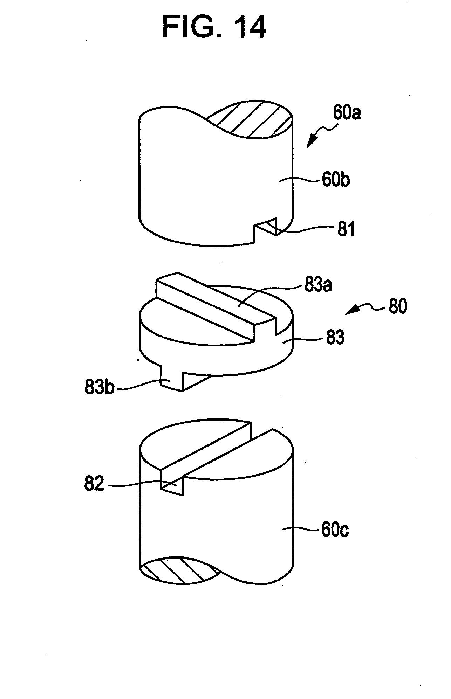

The structure of the fourth embodiment is similar to the structure of the second embodiment except an Oldham coupling 80 is provided at a lower portion 60a of an intermediate shaft 60. More specifically, the lower portion 60a of the intermediate shaft 60 has a smaller diameter than an upper portion of the intermediate shaft 60, and is divided into upper and lower segments 60b and 60c at an intermediate position thereof. As shown in an enlarged view of Fig. 14, fitting grooves 81 and 82 are respectively formed in the bottom surface of the upper segment 60b and the top surface of the lower segment 60c so as to extend perpendicularly to each other. A coupling member 83 having projections 83a and 83b to be fitted to the fitting grooves 81 and 82, respectively, on top and bottom surfaces thereof is disposed between the two segments 60b and 60c. The upper segment 60b and the lower segment 60c of the intermediate shaft 60 are rotatably supported by respective bearings 84 and 85 in the through hole 26 of the swivel joint 10.

In the fourth embodiment, even when the intermediate shaft 60 expands or contracts due to temperature variation or the like, or even when the intermediate shaft 60 has manufacturing errors, since the Oldham coupling 80 is provided at the lower portion 60a of the intermediate shaft 60, the expansion/contraction and the manufacturing errors of the intermediate shaft 60 can be absorbed within the depths of the fitting grooves 81 and 82 in the Oldham coupling 80. Therefore, application of abnormal load can be more effectively prevented.

The present invention is not limited to the above-described first to fourth embodiments, and includes other various embodiments. For example, in the above-described embodiments, the through hole 26 is formed along the centerline of the swivel joint 10 disposed at the rotational center of the upper rotating body 4 and the intermediate shaft 30 or 60 is disposed so as to extend through the through hole 26. However, the present invention is not limited to this, and an intermediate shaft may also be disposed in a through hole formed at a position separated from the centerline of the swivel joint 10. In addition, the structure of the swivel joint 10 is, of course, not limited to that described in the above-described embodiments.

Although the invention has been described with reference to the preferred embodiments in the attached figures, it is noted that equivalents may be employed and substitutions made herein without departing from the scope of the invention as recited in the claims.

A mechanical steering device includes an intermediate shaft (30) that extends through a through hole (26) formed in a swivel joint (10) that is disposed at a rotational center of an upper rotating body, a first bevel gear unit (31) that is attached to a top surface of the swivel joint and transmits a steering force of a steering wheel from a transmission shaft (38) in the upper rotating body to the intermediate shaft, and a second bevel gear unit (32) that is attached to a bottom surface of the swivel joint and transmits the steering force transmitted to the intermediate shaft to wheels through a transmission shaft (49) in a lower traveling body. The first and second bevel gear units are respectively attached to the top and bottom surfaces of the swivel joint with brackets (40, 21) interposed between the swivel joint and the first and second bevel gear units. A universal joint (47) is disposed between the intermediate shaft and a shaft (45a) of a bevel gear included in at lease one of the first and second bevel gear units.

## Claims

1. A mechanical steering device of a working vehicle, comprising:
a lower traveling body (2) having wheels;
an upper rotating body (4) that is rotatably mounted on the lower traveling body (2); and
a cab (5) provided on the upper rotating body (4) and configured to function as an operator's cabin while the working vehicle is in operation and as a driver's cabin while the working vehicle is driving, **characterized in that**
the mechanical steering device of the working vehicle further comprises:
a swivel joint (10) disposed at a rotational center of the upper rotating body (4);
an intermediate shaft (30, 60) that extends through a through hole (26) formed in the swivel joint (10);
a first bevel gear unit (31) attached to a top surface of the swivel joint (10) and configured to transmit a steering force of a steering wheel disposed in the cab (5) from a transmission shaft (14, 38) disposed in the upper rotating body (4) to the intermediate shaft (30, 60); and
a second bevel gear unit (32) attached to a bottom surface of the swivel joint (10) and configured to transmit the steering force transmitted to the intermediate shaft (30, 60) to the wheels through a transmission shaft (49) disposed in the lower traveling body (2),
wherein the first and second bevel gear units (31, 32) are respectively attached to the top and bottom surfaces of the swivel joint (10) with brackets (21, 23) interposed between the swivel joint (10) and the first and second bevel gear units (31, 32), and
wherein a universal joint (47, 61) is disposed between the intermediate shaft (30, 60) and a shaft of a bevel gear included in at least one of the first and second bevel gear units (31, 32).

2. The mechanical steering device according to Claim 1, wherein a bearing (51, 84, 85) for rotatably supporting the intermediate shaft (30, 60) is disposed in the through hole (26) of the swivel joint (10).

3. The mechanical steering device according to one of Claims 1 and 2, wherein the bottom end of the intermediate shaft (30, 60) projects downward beyond the bottom surface of the swivel joint (10) and the universal joint (47) is exposed between the bottom end of the intermediate shaft (30, 60) and a shaft of a bevel gear included in the second bevel gear unit (32).

4. The mechanical steering device according to one of Claims 1 to 3, wherein the bracket (21) interposed between the second bevel gear unit (32) and the bottom surface of the swivel joint (10) provides a function of connecting the swivel joint (10) to the lower traveling body (2).

5. The mechanical steering device according to one of Claims 1 to 4, wherein the intermediate shaft (30, 60) is divided into two segments at an intermediate position thereof and is capable of transmitting a rotational force through an Oldham coupling (80) disposed at the position where the intermediate shaft (30, 60) is divided.

6. The mechanical steering device according to one of Claims 1 to 5, wherein the cab (5) is provided on the upper rotating body (4) with mounting rubbers (6) interposed therebetween, and
wherein the transmission shaft (14, 38) in the upper rotating body (4) extends across the cab (5) and the upper rotating body (4), is extendable and retractable, and is supported by a bearing (18).

## Patentansprüche

1. Mechanische Steuervorrichtung für ein Arbeitsfahrzeug, mit:
einem unteren Fahrkörper (2) mit Rädern;
einem oberen Drehkörper (4), der drehbar an dem unteren Fahrkörper (2) befestigt ist, und
einem Führerhaus (5), das an dem oberen Drehkörper (4) vorgesehen ist und gestaltet ist, um als eine Bedienpersonenkabine zu funktionieren, während das Arbeitsfahrzeug in Betrieb ist, und als Fahrerkabine, während das Arbeitsfahrzeug fährt,
**dadurch gekennzeichnet, dass**
die mechanische Steuervorrichtung des Arbeitsfahrzeugs ferner Folgendes aufweist:
ein Drehgelenk (10), das an einer Drehmitte des oberen Drehkörpers (4) angeordnet ist;
eine Zwischenwelle (30, 60), die sich durch ein Durchgangsloch (26) erstreckt, das in dem Drehgelenk (10) ausgebildet ist;
eine erste Kegelgetriebeeinheit (31), die an einer oberen Fläche des Drehgelenks (10) befestigt ist und gestaltet ist, um eine Lenkkraft eines Lenkrads, welches in dem Führerhaus (5) angeordnet ist, von einer Übertragungswelle (14, 38), die in dem oberen Drehkörper (4) angeordnet ist, an die Zwischenwelle (30, 60) zu übertragen; und
eine zweite Kegelgetriebeeinheit (32), die an einer unteren Fläche des Drehgelenks (10) befestigt ist und gestaltet ist, um die Lenkkraft, die an die Zwischenwelle (30, 60) übertragen ist, durch eine Übertragungswelle (49), die in dem unteren Fahrkörper (2) angeordnet ist, auf die Räder zu übertragen,
wobei die erste und die zweite Kegelgetriebeeinheit (31, 32) jeweils an der oberen Fläche und der unteren Fläche des Drehgelenks (10) befestigt sind, wobei Halter (21, 23) zwischen dem Drehgelenk (10) und der ersten und der zweiten Kegelgetriebeeinheit (31, 32) liegen, und
wobei ein Kreuzgelenk (47, 61) zwischen der Zwischenwelle (30, 60) und einer Welle eines Kegelgetriebes, welche in wenigstens einer von der ersten und der zweiten Kegelgetriebeeinheit (31, 32) enthalten ist, angeordnet ist.

2. Mechanische Steuervorrichtung nach Anspruch 1, wobei ein Lager (51, 84, 85) zur drehbaren Abstützung der Zwischenwelle (30, 60) in dem Durchgangsloch (26) des Drehgelenks (10) angeordnet ist.

3. Mechanische Steuervorrichtung nach einem der Ansprüche 1 und 2, wobei das untere Ende der Zwischenwelle (30, 60) nach unten über die untere Fläche des Drehgelenks (10) hinaus vorragt und das Kreuzgelenk (47) zwischen dem unteren Ende der Zwischenwelle (30, 60) und einer Welle eines Kegelgetriebes, das in der zweiten Kegelgetriebeeinheit (32) enthalten ist, freiliegend ist.

4. Mechanische Steuervorrichtung nach einem der Ansprüche 1 bis 3, wobei der Halter (21), der zwischen der zweiten Kegelgetriebeeinheit (32) und der unteren Fläche des Drehgelenks (10) liegt, eine Verbindungsfunktion des Drehgelenks (10) mit dem unteren Fahrkörper (2) vorsieht.

5. Mechanische Steuervorrichtung nach einem der Ansprüche 1 bis 4, wobei die Zwischenwelle (30, 60) an einer Zwischenposition von dieser in zwei Segmente aufgeteilt ist und in der Lage ist, eine Drehkraft durch eine Oldham-Kupplung (80) zu übertragen, die an der Position angeordnet ist, an der die Zwischenwelle (30, 60) geteilt ist.

6. Mechanische Steuervorrichtung nach einem der Ansprüche 1 bis 5, wobei das Führerhaus (5) an dem oberen Drehkörper (4) mit dazwischenliegenden Montagegummis (6) vorgesehen ist, und
wobei sich die Übertragungswelle (14, 38) in dem oberen Drehkörper (4) über das Führerhaus (5) und den oberen Drehkörper (4) erstreckt, ausfahrbar und einfahrbar ist und durch ein Lager (18) gestützt ist.

## Revendications

1. Dispositif de direction mécanique d'un véhicule de travail,
comprenant
un corps mobile inférieur (2) ayant des roues;
un corps rotatif supérieur (4) qui est monté en rotation sur le corps mobile inférieur (2);
et
une cabine (5) prévue sur le corps rotatif supérieur (4) et configurée de manière à fonctionner en tant que cabine d'un opérateur alors que le véhicule de travail est en fonctionnement et en tant que cabine de conducteur alors que le véhicule de travail est en train de rouler, **caractérisé en ce que**
le dispositif de direction mécanique du véhicule de travail comprend en plus :
un joint articulé (10) disposé au niveau d'un centre de rotation du corps rotatif supérieur (4);
un arbre intermédiaire (30, 60) qui se déploie à travers un trou traversant (26) formé dans le joint articulé (10);
une première unité d'engrenage conique (31) fixée à une surface supérieure du joint articulé (10) et configurée pour transmettre une force de direction d'un volant de direction disposé dans la cabine (5) depuis un arbre de transmission (14, 38) disposé dans le corps rotatif supérieur (4) à l'arbre intermédiaire (30, 60); et
une deuxième unité d'engrenage conique (32) fixée à une surface inférieure du joint articulé (10) et configurée pour transmettre la force de direction transmise à l'arbre intermédiaire (30, 60) aux roues à travers un arbre de transmission (49) disposé dans le corps mobile inférieur (2),
dans lequel la première et la deuxième unités d'engrenages coniques (31, 32) sont respectivement fixées aux surfaces supérieure et inférieure du joint articulé (10) par des bras-support (21, 23) interposés entre le joint articulé (10) et la première et la deuxième unités d'engrenages coniques (31, 32), et
où un joint de cardan (47, 61) est disposé entre l'arbre intermédiaire (30, 60) et un arbre d'un engrenage conique qui se trouve dans au moins l'une de la première et de la deuxième unités d'engrenages coniques (31, 32).

2. Dispositif de direction mécanique selon la revendication 1, dans lequel un palier (51, 84, 85) destiné à soutenir en rotation l'arbre intermédiaire (30, 60) est disposé dans le trou traversant (26) du joint articulé (10).

3. Dispositif de direction mécanique selon l'une des revendications 1 et 2, dans lequel l'extrémité inférieure de l'arbre intermédiaire (30, 60) se projette vers le bas au-delà de la surface inférieure du joint articulé (10) et le joint de cardan (47) est exposé entre l'extrémité inférieure de l'arbre intermédiaire (30, 60) et un arbre d'un engrenage conique qui se trouve dans la deuxième unité d'engrenage conique (32).

4. Dispositif de direction mécanique selon l'une des revendications 1 à 3, dans lequel le bras-support (21) interposé entre la deuxième unité d'engrenage conique (32) et la surface inférieure du joint articulé (10) sert à relier le joint articulé (10) au corps mobile inférieur (2).

5. Dispositif de direction mécanique selon l'une des revendications 1 à 4, dans lequel l'arbre intermédiaire (30, 60) est divisé en deux segments à une position intermédiaire de celui-ci et est capable de transmettre une force de rotation à travers un joint d'Oldham (80) disposé à la position où l'arbre intermédiaire (30, 60) est divisé.

6. Dispositif de direction mécanique selon l'une des revendications 1 à 5, où la cabine (5) est dotée, sur le corps rotatif supérieur (4), de caoutchoucs de montage (6) qui sont interposés entre eux, et
où l'arbre de transmission (14, 38) dans le corps rotatif supérieur (4) s'étend en travers de la cabine (5) et le corps rotatif supérieur (4), peut se dilater et se rétracter, et est soutenu par un palier (18).
